# EUROPÄISCHE PATENTSCHRIFT

(11) **EP 2 423 554 B1**
(45) Veröffentlichungstag und Bekanntmachung des Hinweises auf die Patenterteilung: **16.03.2016**
(21) Anmeldenummer: 10405157.8
(22) Anmeldetag: 31.08.2010
(51) Int. Cl.: F16L 37/092

(54) **Fitting für Wasserrohre**
Fitting for water pipes
Raccord pour tuyaux d'eau

(43) Veröffentlichungstag der Anmeldung: 29.02.2012
(73) Patentinhaber: Geberit International AG, 8645 Jona (CH)
(72) Erfinder: Lippuner, Marc, 8645 Jona (CH)
(74) Vertreter: Frischknecht, Harry Ralph

(56) Entgegenhaltungen:
- EP-A2- 1 995 506
- EP-A2- 2 180 224

## Beschreibung

Die Erfindung betrifft einen Fitting für Wasserrohre, mit wenigstens einem Stutzen, auf den ein anzuschliessendes Rohrende aufschiebbar ist, mit einem Aussenteil, welches den Stutzen umgibt und mit einer Aussenseite des Stutzens einen Zwischenraum bildet, in den das anzuschliessende Rohrende einschiebbar ist, mit einem Kontrollring, der im Zwischenraum angeordnet ist und der beim Einschieben des Rohrendes durch dieses im Zwischenraum von einer ersten in eine zweite Position verschoben wird, mit wenigstens einem Dichtring, der in einer Nut des Stutzens gelagert ist und bei aufgeschobenem Rohrende dieses gegenüber dem Rohrende abdichtet.

Ein Fitting dieser Art ist im Stand der Technik durch die EP-A-1 972 844 bekannt geworden. Bei diesem wird beim Einschieben des Rohrendes auf den Stutzen ein Kontrollring von einer ersten in eine zweite Position verschoben. Durch die Verschiebung des Kontrollringes findet in einem Sichtfenster eine Farb- bzw. Kontraständerung statt, die eine Kontrolle über einen korrekten Anschluss des Rohrendes ermöglichen soll. Kontrollierbar ist damit die korrekte Endposition des Rohrendes. Ist das anzuschliessende Rohrende versehentlich nicht hinreichend entgratet oder unrund, so ist es möglich, dass der Dichtring beim Einschieben des Rohrendes in den Zwischenraum durch dieses aus einer Nut ausrollt. Die an sich sonst korrekte Verbindung ist dann schliesslich nicht dicht, da der Dichtring sich in einer nicht vorgesehenen Position befindet und seine Dichtfunktion somit im Wesentlichen nicht vollständig übernehmen kann. Die Verbindung ist dadurch möglicherweise nicht dicht, was zu einem erheblichen Bauschaden führen kann.

Aus der EP 2 180 224 und der EP 1 995 506 sind Fittings bekannt, welche auf dem Anschlussstutzen angeordnete und durch ein Rohrende verschiebbare Ringe zeigen.

Der Kontrollring der EP 2 180 224 ist lose auf einer Hülse angeordnet und kann durch ein Rohr entsprechend bewegt werden. In allen Ausführungsformen ist der Kontrollring also in seiner Ausgangslage relativ zur Hülse 11 bewegbar und nimmt in der Ausgangslage, also wenn noch kein Rohr mit der Hülse 11 verbunden wird, eine undefinierte Stellung ein.

Der Erfindung liegt die Aufgabe zugrunde, einen Fitting der genannten Gattung zu schaffen, der eine noch höhere Sicherheit gewährleistet. Der Fitting soll trotzdem kostengünstig in hohen Stückzahlen herstellbar sein. Zudem soll ein Kontrollring in einfacher Art und Weise an einer exakt definierten Ausgangslage gehalten werden, so ein Installateur immer die gleichen Voraussetzungen bei der Montage von mehreren Fittings vorfindet.

Die Aufgabe ist gemäss Anspruch 1 dadurch gelöst, dass der Kontrollring in einer ersten Position an einem Rückhaltemittel positioniert ist. Der Kontrollring wird also einem bereits am Fitting vorhandenen Element in der ersten Position gehalten, was den Vorteil hat, dass keine weiteren Elemente anzuordnen sind. Somit kann der Fitting kostengünstig und einfach hergestellt werden.

Weiter ist der Kontrollring in der ersten Position so angeordnet ist, dass er beim Montieren durch das anzuschliessende Rohrende über den wenigstens einen Dichtring geschoben wird um dadurch sein Ausrollen zu verhindern. Beim Fitting erfüllt der Kontrollring somit eine Doppelfunktion. Einerseits dient er in an sich bekannter Weise als Kontrollmittel, das ein vollständiges Einschieben des Rohrendes erkennen lässt und andererseits verhindert er bei der Montage ein Ausrollen des wenigstens einen Dichtringes aus seiner Nut. Beide Funktionen können mit dem gleichen Teil bzw. einem vergleichsweise einfachen Ring erfüllt werden. Trotz der höheren Sicherheit kann der erfindungsgemässe Fitting ohne wesentliche Zusatzkosten hergestellt werden.

Durch die DE-A-43 00 004 ist es bereits bekannt, eine Beschädigung eines Dichtungsrings bei einer Anschlussarmatur für Rohre in Folge eines nicht angefasten Rohrendes mittels eines Pilotrings zu vermeiden. Der Pilotring spannt in seiner Ausgangsstellung den Dichtring und wird beim Einschieben des Rohrendes in axialer Richtung vom Dichtring weggeschoben. Nach der Montage befindet sich der Pilotring in einer vorgeschobenen Position und hat keine Funktion mehr.

Wie erwähnt ist vorgesehen, dass im genannten Zwischenraum ein Klemmring angeordnet ist, mit welchem das montierte Rohrende axial fixierbar ist und dass der Kontrollring in der genannten ersten Position an diesem Klemmring positioniert ist. Dies ermöglicht eine Positionierung des Kontrollringes ohne Belastung bzw. Deformation des Dichtringes. Eine solche Deformation ist nachteilig, da sie bei der Lagerung eine vorzeitige Alterung des Dichtringes bewirken kann. Beim Fitting nach dieser Weiterbildung dient der Klemmring somit zur Lagerung des Kontrollringes. Beim Einschieben des Rohrendes wird der Kontrollring durch den Klemmring hindurch geschoben.

Nach einer Weiterbildung der Erfindung ist vorgesehen, dass der Kontrollring am Klemmring durch eine Rastverbindung oder durch Reibschluss gehalten ist. Die Rastverbindung wird nach einer Weiterbildung der Erfindung durch eine Rippe des Klemmrings und eine Nut des Kontrollrings gebildet. Es sind hier aber auch andere Rastverbindung denkbar.

Nach einer Weiterbildung der Erfindung ist vorgesehen, dass der Kontrollring an einer Innenseite eine konische Fläche aufweist, welche den wenigstens einen Dichtring beim Verschieben des Kontrollrings radial komprimiert. In der Ausgangsposition ist vorgesehen, dass diese konische Fläche nicht am genannten Dichtring anliegt und diesen somit nicht belastet. Erst beim Einschieben des Rohrendes kommt diese konische Fläche in Eingriff mit dem Dichtring und komprimiert diesen radial. Der komprimierte Dichtring kann durch die nachfolgende Stirnfläche des Rohrendes nicht aus der Nut ausgerollt werden. Auch dann nicht, wenn das Rohrende an dieser Stirnfläche nicht korrekt bearbeitet ist.

Damit der Kontrollring von der ersten in die zweite Position verschoben werden kann, besitzt dieser eine sich im Wesentlichen rechtwinklig zur Längsrichtung des Fittings erstreckende Anlagefläche. Diese Anlagefläche ist gemäss einer Weiterbildung der Erfindung in Einschubrichtung gesehen wesentlich hinter dem wenigstens einen Dichtring angeordnet. Damit ist sichergestellt, dass der Dichtring komprimiert ist, wenn die Stirnseite des Rohrendes diesen erreicht.

Der Kontrollring ist vorzugsweise in der zweiten Position visuell in einem Sichtfenster des Aussenteils sichtbar. Der Kontrollring erreicht diese zweite Position erst dann, wenn das Rohrende vollständig eingeschoben ist.

Vorteilhafte Weiterbildungen der Erfindung ergeben sich aus den abhängigen Patentansprüchen, der nachfolgenden Beschreibung sowie der Zeichnung.

Ein Ausführungsbeispiel der Erfindung wird nachfolgend anhand der Zeichnung näher erläutert. Es zeigen:
- Fig. 1: ein Axialschnitt durch einen erfindungsgemässen Fitting,

- Fig. 2: eine Ansicht gemäss Fig. 1 jedoch mit einem teilweise eingeschobenen Rohrende und
- Fig. 3: ein Schnitt gemäss Fig. 1 jedoch mit vollständig eingeschobenem Rohrende.

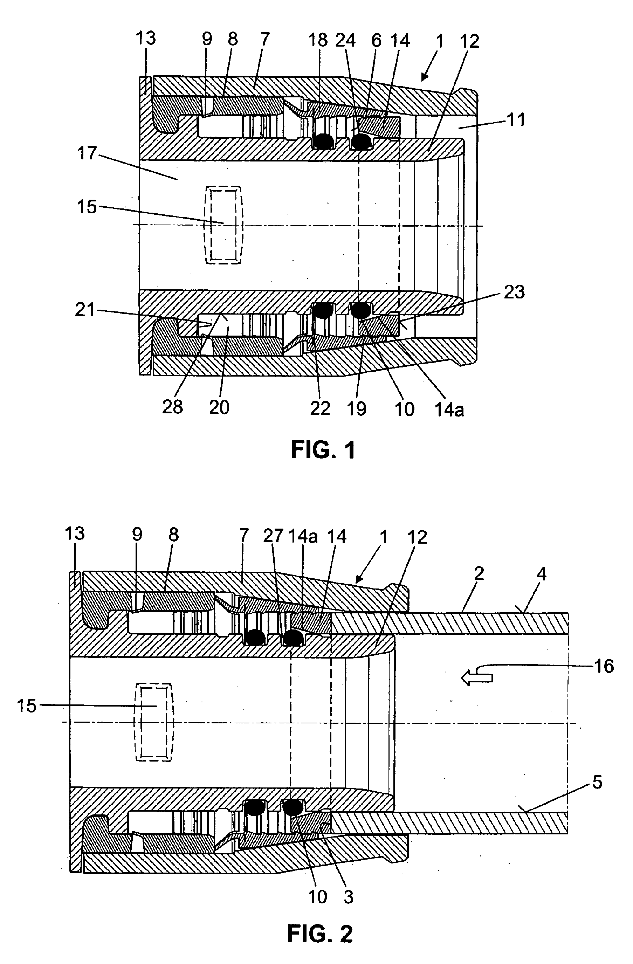

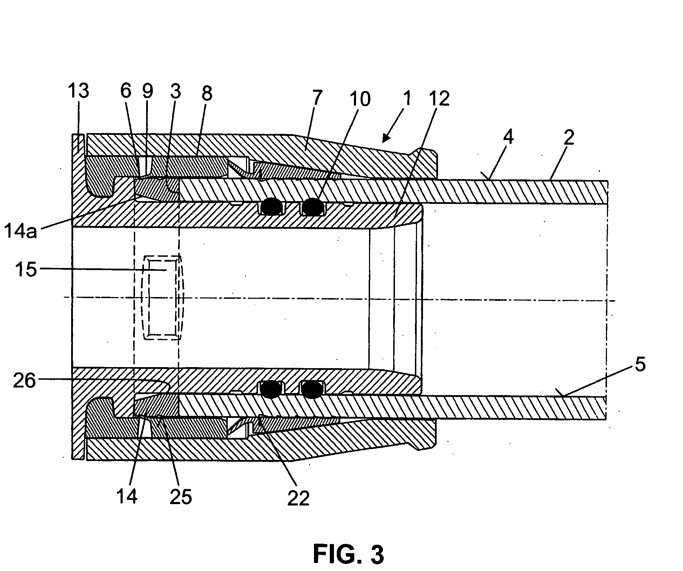

Der in Fig. 1 gezeigte Fitting 1 dient zum Anschliessen eines Rohres 2, wobei dieses wie in den Fig. 2 und 3 gezeigt auf einen Stutzen 12 aufgeschoben wird. Der Zwischenraum 20 ist im Wesentlichen zylindrisch und wird durch den Stutzen 12 und einem Aussenteil 7 gebildet. Der Zwischenraum 20 besitzt an einem vorderen Ende eine ringförmige Öffnung 11, in welche das Rohr 2 gemäss Fig. 2 in Richtung des Pfeiles 16 einschiebbar ist. Das Rohr 2 ist vorzugsweise ein Wasserrohr für eine Sanitärinstallation. Es ist beispielsweise ein Verbundrohr und wird vor dem Montieren an einer Stirnseite 3 beispielsweise mit einem geeigneten Kalibrierwerkzeug entgratet und mit einer Fase versehen. Das Rohr 2 kann auch ein übliches Kunststoffrohr oder Metallrohr sein. Der hier gezeigte Fitting 1 besitzt lediglich einen Stutzen 12. Denkbar ist aber auch eine Ausführung, bei welcher der Fitting 1 ein Doppelfitting mit zwei Stutzen oder beispielsweise auch ein T-Fitting ist. Bezüglich des grundsätzlichen Aufbaus wird auf die EP-A-1 972 844 verwiesen.

Das Aussenteil 7 ist an einem radial nach aussen gerichteten Wulst 13 mit einem Verriegelungsteil 8 mit dem Stutzen 12 fest verbunden. Dieses Aussenteil 8 erstreckt sich in den Zwischenraum 20 und besitzt eine oder mehrere Rastzungen 9, die in den Zwischenraum 20 ragen. Diese Rastzunge 9 dient zum Verrasten eines Kontrollringes 14 in der in Fig. 3 gezeigten Position. Beim Einschieben des Rohres 2 in den Zwischenraum 20 wird dieser Kontrollring 14 mit der Stirnseite 3 des Rohres 2 an einer Rückseite 23 beaufschlagt und von der in Fig. 1 gezeigten ersten Position in die in Fig. 3 gezeigte zweite Position verschoben. Der Kontrollring 14 gleitet hierbei mit einer Aussenseite 25 an einem Rückhaltemittel 18 entlang. Dieses Rückhaltemittel 18 dient dazu, das vollständig eingeschobene Rohr 2 fest im Fitting 1 zu verankern. Das Rückhaltemittel 18 besitzt hierzu einen Krallring 22. Das Rückhaltemittel 18 kann grundsätzlich so ausgebildet sein, wie dies in der oben genannten EP-A-1 972 844 beschrieben ist.

In der in den Fig. 1 und 2 gezeigten ersten Position ist der Kontrollring 14 am Rückhaltemittel 18 verrastet. Dies wird durch eine Rastnut 6 erreicht, in die eine Rippe 19 des Rückhaltemittels 18 eingreift. Beim gezeigten Ausführungsbeispiel sind jeweils zwei Rastnuten 6 und Rippen 19 vorgesehen, die jeweils im Abstand zueinander in Eingriff sind. Anstelle einer Rastverbindung ist hier aber auch eine andere Verbindung, beispielsweise eine reibschlüssige Verbindung denkbar. Der Zweck dieser Verbindung ist die exakte Positionierung des Kontrollringes 14 in der gezeigten ersten Position. Diese Verbindung kann gelöst werden, in dem das Rohr 2 nach einer Beaufschlagung des Kontrollringes 14 axial in die in Fig. 3 gezeigte zweite Position verschoben wird.

Der Kontrollring 14 besitzt an einer Innenseite 26 eine konische Fläche 14a, die sich in den Bereich eines Dichtringes 10 erstreckt. Dieser Dichtring 10 ist in eine Nut 27 an einer Aussenseite 28 des Stutzens 12 eingelegt. Die Fläche 14a ist so angeordnet, dass sie den Dichtring 10 nicht komprimiert. Eine Frontseite 24 des Kontrollringes 14 befindet sich im Wesentlichen auf der Höhe des Dichtringes 10. Die Frontseite 24 und auch die oben genannte Rückseite 23 liegen jeweils in einer Ebene, die im Wesentlichen vertikal zur Längserstreckung des Fittings 1 verläuft. Die Rückseite 23 befindet sich wie ersichtlich wesentlich im Abstand zum Dichtring 10.

In der in Fig. 3 gezeigten zweiten Position des Kontrollringes 14 liegt dieser mit der Frontseite 24 an einer Anschlagfläche 21 an. In dieser Position ist der Kontrollring 14 durch ein Fenster 15 des Aussenteils 7 visuell sichtbar. Anstelle eines einzigen Fensters 15 können auch zwei oder mehr als zwei solche Fenster 15 vorgesehen sein. Ist der Kontrollring 14 im Fenster 15 sichtbar, so ist sichergestellt, dass das Rohr 2 die in Fig. 3 gezeigte Position erreicht hat. Alternativ ist eine Ausführung denkbar, bei welcher der Kontrollring 14 aus einem Fenster verschoben wurde und damit nicht mehr sichtbar ist. Wesentlich ist somit eine wesentliche Kontrast- bzw. Farbänderung, welche visuell sichtbar und auffällig ist. Hat der Kontrollring 14 die in Fig. 3 gezeigte zweite Position erreicht, so wird dieser durch die Rastzunge 9 festgehalten. Das Rohr 2 seinerseits wird durch das Rückhaltemittel 18 verankert, das mit dem Krallring 22 an einer Umfangsfläche 4 des Rohres 2 angreift. Der Dichtring 10 liegt in dieser Position an einer Innenseite 5 des Rohres 2 an und dichtet damit dieses gegenüber dem Stutzen 12 ab. Selbstverständlich können wie gezeigt zwei oder auch mehr als zwei Dichtungsringe vorgesehen sein.

Nachfolgend wird die Montage näher erläutert.

Vor der Montage ist der Fitting 1 gemäss Fig. 1 ausgebildet. Der Kontrollring 14 befindet sich somit in der gezeigten ersten Position. Vor dem Anschliessen wird das Rohr 2 an der Stirnseite 3 in an sich bekannter Weise entgratet und angefast. Dann wird es in die Öffnung 11 achsparallel eingeschoben. An der Stirnseite 3 wird nun der Kontrollring 14 über den Dichtring 10 geschoben. Die konische Fläche 14a kommt jedoch in Eingriff mit dem Dichtring 10 und komprimiert diesen radial. Aufgrund dieser Kompression gleitet nachfolgend das Rohr 2 am komprimierten Dichtring 10 vorbei und kann diesen auch dann nicht ausrollen, wenn es an der Stirnseite 3 nicht entgratet oder etwas unrund ist. Der gleiche Vorgang findet an dem zweiten Dichtring statt. Schliesslich erreicht der Kontrollring 14 die in Fig. 3 gezeigte zweite Position und dient nun durch seine Sichtbarkeit im Fenster 15 als Kontrollmittel, welches das vollständige Einschieben des Rohres 2 erkennen lässt. Der Kontrollring 14 besitzt somit eine Doppelfunktion.

### BEZUGSZEICHENLISTE

- 1: Fitting
- 2: Rohr
- 3: Stirnseite
- 4: Umfangsfläche
- 5: Innenseite
- 6: Rastnut
- 7: Aussenteil
- 8: Verriegelungsteil
- 9: Rastzunge
- 10: Dichtring
- 11: Öffnung
- 12: Stutzen
- 13: Wulst
- 14: Kontrollring
- 14a: Fläche
- 15: Fenster
- 16: Pfeil
- 17: Durchgang
- 18: Rückhaltemittel
- 19: Rippe
- 20: Zwischenraum
- 21: Anschlagfläche
- 22: Krallring
- 23: Rückseite
- 24: Frontseite
- 25: Aussenseite
- 26: Innenseite
- 27: Nut
- 28: Aussenseite

## Patentansprüche

1. Fitting für Wasserrohre, mit wenigstens einem Stutzen (12), auf den ein anzuschliessendes Rohrende (2) aufschiebbar ist, mit einem Aussenteil (7), welches den Stutzen (12) umgibt und mit einer Aussenseite (28) des Stutzens (12) einen Zwischenraum (20) bildet, in den das anzuschliessende Rohrende (2) einschiebbar ist, mit einem Kontrollring (14), der im Zwischenraum (20) angeordnet ist und der beim Einschieben des Rohrendes (2) durch dieses im Zwischenraum (20) von einer ersten in eine zweite Position verschoben wird, mit wenigstens einem Dichtring (10), der in einer Nut (27) des Stutzens (12) gelagert ist und bei eingeschobenem Rohrende (2) dieses gegenüber dem Stutzen (12) abdichtet, wobei der Kontrollring (14) in der ersten Position so angeordnet ist, dass er beim Montieren durch das anzuschliessende Rohrende (2) über den wenigstens einen Dichtring (10) geschoben wird um dadurch sein Ausrollen zu verhindern, und wobei im genannten Zwischenraum (20) ein Rückhaltemittel (18) angeordnet ist, mit welchem das montierte Rohrende (2) axial fixierbar ist, **dadurch gekennzeichnet, dass** der Kontrollring (14) in der genannten ersten Position an diesem Rückhaltemittel (18) positioniert ist, wobei der Kontrollring (14) am Rückhaltemittel (18) lösbar gehalten ist und wobei der Kontrollring (14) mittels einer Rastverbindung oder durch Reibschluss am Rückhaltemittel (18) gehalten ist.

2. Fitting nach Anspruch 1, **dadurch gekennzeichnet, dass** der Kontrollring (14) an einer Rippe (19) des Rückhaltemittels (18) fixiert ist.

3. Fitting nach einem der Ansprüche 1 bis 2, **dadurch gekennzeichnet, dass** der Kontrollring (14) an einer Innenseite (26) eine konische Fläche (14a) aufweist, welche den wenigstens einen Dichtring (10) beim Verschieben des Kontrollringes (14) radial komprimiert.

4. Fitting nach Anspruch 3, **dadurch gekennzeichnet, dass** die konische Fläche (14a) in der ersten Position des Kontrollrings (14) sich wenigstens bereichsweise über den Dichtring (10) erstreckt.

5. Fitting nach einem der Ansprüche 1 bis 4, **dadurch gekennzeichnet, dass** der Kontrollring (14) eine sich im Wesentlichen rechtwinklig zur Längsrichtung des Fittings erstreckende Rückseite (23) aufweist, an welche das anzuschliessende Rohrende an den Kontrollring (14) anlegbar ist um diesen axial zu verschieben.

6. Fitting nach Anspruch 5, **dadurch gekennzeichnet, dass** die genannte Rückseite (23) in Einschubrichtung gesehen wesentlich hinter dem wenigstens einen Dichtring (10) angeordnet ist.

7. Fitting nach einem der Ansprüche 1 bis 6, **dadurch gekennzeichnet, dass** das Aussenteil (7) wenigstens ein Sichtfenster (15) aufweist.

8. Fitting nach Anspruch 7, **dadurch gekennzeichnet, dass** der Kontrollring (14) in der zweiten Position im Sichtfenster (15) sichtbar ist.

9. Fitting nach einem der Ansprüche 1 bis 8, **dadurch gekennzeichnet, dass** der Kontrollring (14) in der zweiten Position verrastet ist.

10. Fitting nach Anspruch 9, **dadurch gekennzeichnet, dass** der Kontrollring (14) in der zweiten Position mittels eines Rastmittels (9) verrastet ist.

## Claims

1. Fitting for water pipes, having at least one connecting stub (12), onto which can be pushed a pipe end (2) which is to be connected, having an outer part (7), which encloses the connecting stub (12) and, with an outer side (28) of the connecting stub (12), forms an interspace (20), into which can be pushed the pipe end (2) which is to be connected, having a control ring (14), which is arranged in the interspace (20), and, when the pipe end (2) is being pushed in, is displaced by said pipe end, in the interspace (20), from a first position into a second position, and having at least one sealing ring (10), which is mounted in a groove (27) of the connecting stub (12) and, when the pipe end (2) has been pushed in, seals said pipe end in relation to the connecting stub (12), wherein the control ring (14), in the first position, is arranged in such a way that, during installation, it is pushed, by the pipe end (2) which is to be connected, over the at least one sealing ring (10), in order thus to prevent the latter from rolling out, and wherein the aforementioned interspace (20) has arranged in it a restraining means (18), by way of which the pipe end (2) once installed, can be fixed axially, **characterized in that** the control ring (14), in the aforementioned first position, is positioned on said restraining means (18), wherein the control ring (14) is retained in a releasable manner on the restraining means (18), and wherein the control ring (14) is retained on the restraining means (18) by means of a latching connection or by a friction fit.

2. Fitting according to Claim 1, **characterized in that** the control ring (14) is fixed on a rib (19) of the restraining means (18).

3. Fitting according to one of Claims 1 to 2, **characterized in that** the control ring (14), on an inner side (26), has a conical surface (14a), which radially compresses the at least one sealing ring (10) during displacement of the control ring (14).

4. Fitting according to Claim 3, **characterized in that** the conical surface (14a), in the first position of the control ring (14), extends, at least in part, over the sealing ring (10).

5. Fitting according to one of Claims 1 to 4, **characterized in that** the control ring (14) has a rear side (23), which extends essentially at right angles to the longitudinal direction of the fitting and against which the pipe end which is to be connected can be positioned on the control ring (14) in order to displace the latter axially.

6. Fitting according to Claim 5, **characterized in that** the aforementioned rear side (23) is arranged essentially downstream of the at least one sealing ring (10), as seen in the push-in direction.

7. Fitting according to one of Claims 1 to 6, **characterized in that** the outer part (7) has at least one viewing window (15).

8. Fitting according to Claim 7, **characterized in that** the control ring (14), in the second position, can be viewed in the viewing window (15).

9. Fitting according to one of Claims 1 to 8, **characterized in that** the control ring (14) is latched in the second position.

10. Fitting according to Claim 9, **characterized in that** the control ring (14) is latched in the second position by way of a latching means (9).

## Revendications

1. Raccord pour tuyaux d'eau, avec au moins une tubulure (12), sur laquelle une extrémité de tuyau à raccorder (2) peut être engagée, avec une partie extérieure (7), qui entoure la tubulure (12) et forme avec un côté extérieur (28) de la tubulure (12) une chambre intermédiaire (20), dans laquelle l'extrémité de tuyau à raccorder (2) peut être insérée, avec une bague de contrôle (14), qui est disposée dans la chambre intermédiaire (20) et qui, lors de l'insertion de l'extrémité de tuyau (2), est déplacée par celle-ci dans la chambre intermédiaire (20) d'une première position à une deuxième position, avec au moins un joint torique (10), qui est placé dans une rainure (27) de la tubulure (12) et qui rend l'extrémité de tuyau (2), lorsqu'elle est insérée, étanche par rapport à la tubulure (12), dans lequel la bague de contrôle (14) est disposée dans la première position de manière telle que lors du montage elle soit glissée par l'extrémité de tuyau à raccorder (2) au-dessus dudit au moins un joint torique (10) afin d'empêcher ainsi qu'il sorte en roulant, et dans lequel un moyen de retenue (18) est disposé dans ladite chambre intermédiaire (20), avec lequel l'extrémité de tuyau montée (2) peut être fixée axialement, **caractérisé en ce que** la bague de contrôle (14) est positionnée dans ladite première position sur ce moyen de retenue (18), dans lequel la bague de contrôle (14) est maintenue de façon séparable sur le moyen de retenue (18) et dans lequel la bague de contrôle (14) est maintenue sur le moyen de retenue (18) par encliquetage ou par friction.

2. Raccord selon la revendication 1, **caractérisé en ce que** la bague de contrôle (14) est fixée à une nervure (19) du moyen de retenue (18).

3. Raccord selon l'une quelconque des revendications 1 à 2, **caractérisé en ce que** la bague de contrôle (14) présente sur un côté intérieur (26) une surface conique (14a), qui comprime radialement ledit au moins un joint torique (10) lors du déplacement de la bague de contrôle (14).

4. Raccord selon la revendication 3, **caractérisé en ce que** la surface conique (14a) s'étend dans la première position de la bague de contrôle (14) au moins localement au-dessus du joint torique (10).

5. Raccord selon l'une quelconque des revendications 1 à 4, **caractérisé en ce que** la bague de contrôle (14) présente un côté arrière (23) qui s'étend essentiellement perpendiculairement à la direction longitudinale du raccord, sur lequel l'extrémité de tuyau à raccorder peut être appliquée sur la bague de contrôle (14) afin de déplacer celle-ci axialement.

6. Raccord selon la revendication 5, **caractérisé en ce que** ledit côté arrière (23), considéré dans la direction d'insertion, est disposé nettement derrière ledit au moins un joint torique (10).

7. Raccord selon l'une quelconque des revendications 1 à 6, **caractérisé en ce que** la partie extérieure (7) présente au moins une fenêtre de regard (15).

8. Raccord selon la revendication 7, **caractérisé en ce que** la bague de contrôle (14) est visible dans la fenêtre de regard (15) dans la deuxième position.

9. Raccord selon l'une quelconque des revendications 1 à 8, **caractérisé en ce que** la bague de contrôle (14) est encliquetée dans la deuxième position.

10. Raccord selon la revendication 9, **caractérisé en ce que** la bague de contrôle (14) est encliquetée au moyen d'un moyen d'encliquetage (9) dans la deuxième position.
